# EUROPÄISCHE PATENTSCHRIFT

(11) **EP 3 774 497 B1**
(45) Veröffentlichungstag und Bekanntmachung des Hinweises auf die Patenterteilung: **05.07.2023**
(21) Anmeldenummer: 19716823.0
(22) Anmeldetag: 29.03.2019
(51) Int. Cl.: B62D 5/00

(54) **LENKVORRICHTUNG MIT SIMULIERTEM LENKWIDERSTANDSMOMENT**
STEERING DEVICE HAVING A SIMULATED STEERING RESISTANCE TORQUE
DISPOSITIF DE DIRECTION POURVU D'UN COUPLE DE RÉSISTANCE DE DIRECTION SIMULÉ

(30) Priorität: 04.04.2018 DE 102018205056
(43) Veröffentlichungstag der Anmeldung: 17.02.2021
(73) Patentinhaber: thyssenkrupp Presta AG, 9492 Eschen (LI); thyssenkrupp AG, 45143 Essen (DE)
(72) Erfinder: MUNDING, Christoph, 9492 Eschen (LI); KURZ, Hannes, 6800 Feldkirch (AT)
(74) Vertreter: thyssenkrupp Intellectual Property GmbH
(86) Internationale Anmeldenummer: PCT/EP2019/057976
(87) Internationale Veröffentlichungsnummer: WO 2019/192928

(56) Entgegenhaltungen:
- EP-A2- 0 926 046
- WO-A1-02/40336
- WO-A1-2011/161492
- DE-A1- 10 307 567
- DE-U1-202004 017 030
- JP-A- 2007 269 278
- JP-U- S62 131 974
- US-A1- 2017 158 222

## Beschreibung

Die vorliegende Erfindung betrifft eine Lenkvorrichtung mit simuliertem Lenkwiderstandsmoment, insbesondere für Steer-by-Wire-Lenksysteme von Fahrzeugen, aufweisend mindestens ein Lenksäulengehäuse und mindestens eine darin relativ zu diesem beweglich angeordnete und in wenigstens einem Lager geführte Lenkspindel, wobei ein zwischen Lenkspindel und Lenksäulengehäuse wirkendes Reibmittel und ein auf dieses Reibmittel wirkendes und in seiner Vorspannkraft einstellbares Vorspannmittel vorgesehen sind, wobei das Vorspannmittel mit einem ersten Ende am Lenksäulengehäuse befestigt ist, wobei das Vorspannmittel mit einem zweiten Ende das Reibmittel radial auf eine Umfangsfläche der Lenkspindel pressend ist, wobei das Vorspannmittel eine mehrschenkelige Blattfeder aufweist, die mit zwei Schenkeln entweder am Lenksäulengehäuse oder am Reibmittel befestigt ist, wobei das Reibmittel an dem zweiten Ende (7) des Vorspannmittels (9) formschlüssig befestigt ist.

Lenkvorrichtungen mit simuliertem Lenkwiderstandsmoment der eingangs genannten Art sind bekannt. Sie dienen dazu, dem Fahrer eines Fahrzeugs mit Steer-by-Wire-Lenksystem eine Rückmeldung über das anliegende Lenkmoment zu vermitteln, da Lenkrad und Räder bei derartigen Lenksystemen keine mechanische Verbindung aufweisen und sich das Lenkrad entsprechend nahezu widerstandslos dreht.

Beispielsweise offenbart die DE 10307567 A1 eine solche Vorrichtung, bei der das Lenkwiderstandsmoment durch eine metallische, vorzugsweise konische, Reibfläche eines Lenkkraftsimulators erzeugt wird, welche mittels einer einstellbaren Feder axial auf ein konisches Ende der Lenkwelle gedrückt wird. Ein Nachteil der bekannten Vorrichtung ist, dass die Lenkwelle abweichend zu einer konventionellen Bauform mit einem konischen Ende versehen werden muss und dass für die Einstellung der Reibkraft ein aus mehreren Elementen bestehender, aufwändiger Mechanismus erforderlich ist.

Eine weitere Vorrichtung der eingangs genannten Art offenbart die EP 1655202 A2. Bei dieser wird das Lenkwiderstandsmoment durch um die Lenkspindel angeordnete Reibelemente erzeugt, die mittels einer Feder aufeinander gepresst werden, wobei die durch die Feder aufgebrachte Federspannung durch eine Klemmmutter am Lenkwellengehäuse einstellbar ist. Ein Nachteil dieser bekannten Vorrichtung ist, dass sowohl die Lenkwelle als auch das Lenkwellengehäuse konstruktiv angepasst werden müssen, um einerseits die Reibelemente und andererseits die Klemmmutter aufnehmen zu können.

Eine weitere Vorrichtung der eingangs genannten Art ist aus der EP 0926046 A2 bekannt. Bei der bekannten Vorrichtung wird das Lenkwiderstandsmoment durch ein nabenseitiges, also ein mit der Lenkwelle verbundenes, und ein gehäuseseitiges Reibelement erzeugt, wobei das gehäuseseitige Reibelement zur Aufhebung des Lenkwiderstandmoments von dem Gehäuse abgekuppelt werden kann. Nachteil dieser Vorrichtung ist, dass sowohl die Lenkwelle als auch das Lenkwellengehäuse konstruktiv angepasst werden müssen, um die Reibelemente aufnehmen zu können. Auch wird für die Kupplung bzw. Entkupplung des gehäuseseitigen Reibelements ein relativ aufwändiger Mechanismus benötigt.

Eine Vorrichtung der eingangs genannten Art ist in der gattungsgemäßen US 2017/158222 A1 beschrieben. Diese weist eine an der Lenkwelle reibende Blattfeder auf. Ein Problem dabei ist, dass die erforderliche Reibwirkung nicht funktionssicher und einfach realisierbar ist.

Der vorliegenden Erfindung liegt daher die Aufgabe zugrunde, eine Lenkvorrichtung mit simuliertem Lenkwiderstandsmoment, insbesondere für Steer-by-Wire-Lenksysteme von Fahrzeugen, anzugeben, die funktionssicher und einfach ist, und einem Fahrer des Fahrzeugs dennoch eine gewisse Schwergängigkeit der Lenkbewegung vermittelt.

Die erfindungsgemäße Lösung ergibt sich aus den Merkmalen des Anspruchs 1. Vorteilhafte Ausgestaltungsformen sind in den Unteransprüchen beschrieben.

Erfindungsgemäß ist vorgesehen, dass die Blattfeder u-förmig ausgestaltet ist.

In der erfindungsgemäßen Ausführungsform ist vorgesehen, dass die Blattfeder u-förmig ausgestaltet ist. Eine derartige u-förmige Bauform einer Blattfeder ist mit Vorteil kostengünstig herstellbar. Auch ist die Montage einer u-förmigen Blattfeder in vorteilhafter Weise sehr platzsparend möglich.

Das Vorspannmittel ist mit einem zweiten Ende das Reibmittel radial auf eine Umfangsfläche der Lenkspindel pressend. Auf diese Weise wird mit Vorteil bei einer Lenkbewegung durch den Fahrer des Fahrzeugs ein gleichmäßiges, zwischen der Lenkspindel und dem Lenkgehäuse wirkendes, simuliertes Lenkwiderstandsmoment erzeugt. Die Höhe des Lenkwiderstandsmoments ist über die Einstellung der Vorstellkraft des Vorspannmittels vorgebbar, da sich die das Lenkwiderstandsmoment erzeugende Reibkraft aus der Vorstellkraft multipliziert mit dem Reibkoeffizient der vorliegenden Reibpaarung ergibt. Aufgrund des einstellbaren Vorspannmittels ist die Höhe des Lenkwiderstandmoments unabhängig von Fertigungstoleranzen und kann für unterschiedliche Lagersysteme eingestellt werden. Aufgrund der sehr vorteilhaften radialen Pressung des Reibmittels auf die Umfangsfläche der Lenkspindel ist das Lenkwiderstandsmoment ebenfalls unabhängig von der Drehbewegung sowie der Drehrichtung und wird nicht bzw. nur äußerst gering von einem durch einen Haft-Gleitreibungs-Übergang hervorgerufenen Losbrechmoment (Stick-Slip-Effekt) beeinflusst, da Haft- und Gleitreibungskoeffizient der unter der Vorstellkraft stehenden Reibpaarung Reibmittel/Lenkspindel-Umfangsfläche annähernd identisch sind.

Es ist vorgesehen, dass das Vorspannmittel eine mehrschenkelige Blattfeder aufweist, insbesondere eine dreischenkelige Blattfeder. Die Feder dient dazu, die Vorspannkraft zu erzeugen, um das Reibmittel radial auf die Umfangsfläche der Lenkspindel zu pressen. Die Feder kann insbesondere eine günstig herstellbare Blattfeder sein, die mehrere Schenkel aufweisen kann. Die Schenkel der Blattfeder dienen einerseits zur Befestigung am Lenksäulengehäuse und andererseits zur Aufnahme des Reibmittels. Insbesondere eine dreischenkelige Blattfeder ist von Vorteil, da mit dieser konstante, von der Drehrichtung weitestgehend unabhängige Vorspannkräfte erzeugt werden können, da die durch die Blattfeder erzeugte Vorspannkraft symmetrisch auf das Reibmittel übertragbar ist, indem zwei Schenkel jeweils das Reibmittel kontaktierend sind und der dritte Schenkel zur Befestigung am Lenksäulengehäuse dient. Auch eine Umkehrung ist erfindungsgemäß, besonders dann, wenn der eine, das Reibmittel tragende Schenkel eine zu diesem eher große Fläche aufweist, das Flächenverhältnis Schenkel zu Reibmittel kurz unter oder nahe bei eins liegt.

Bei der Erfindung ist vorgesehen, dass das Reibmittel an dem zweiten Ende des Vorspannmittels formschlüssig befestigt ist. Das Reibmittel ist an dem zweiten Ende des Vorspannmittels, nämlich einer Blattfeder, befestigt, während das erste Ende an dem Lenksäulengehäuse befestigt ist. Hierdurch kann in vorteilhafter Weise die durch das Vorspannmittel erzeugte Vorspannkraft auf das Reibmittel übertragen werden, um erfindungsgemäß das Reibmittel mit der Vorspannkraft radial auf die Umfangsfläche der Lenkspindel zu pressen. Eine formschlüssige Befestigung des Reibmittels an dem Vorspannmittel ist von Vorteil, da auf diese Weise eine Relativbewegung zwischen dem Reibmittel und dem Vorspannmittel verhindert wird, sodass möglichst konstante Reibverhältnisse vorliegen.

In einer bevorzugten Ausführungsform ist vorgesehen, dass das Vorspannmittel das Reibmittel derart auf die Umfangsfläche der Lenkspindel pressend ist, dass ein so erzeugtes Lenkwiderstandsmoment unabhängig von einer Drehrichtung der Lenkspindel ist, insbesondere symmetrisch um eine Nullauslenkung ist und in seiner Höhe bei Beginn und während einer Drehungsbewegung der Lenkspindel annähernd gleichbleibend ist. Hierdurch wird in vorteilhafter Weise ein konstantes Lenkwiderstandsmoment erzeugt, das weitestgehend unabhängig von der Drehrichtung ist und auch nur geringfügig durch Losbrechmomente bei Beginn einer Drehungsbewegung, die aufgrund eines Haft-Gleitreibungs-Übergangs auftreten können, beeinflusst wird.

Bei der Erfindung ist vorgesehen, dass die mehrschenkelige Blattfeder mit zwei Schenkeln entweder am Lenksäulengehäuse oder am Reibmittel befestigt ist. Hierdurch wird in vorteilhafter Weise ein konstantes, von der Drehrichtung unabhängiges Lenkwiderstandsmoment erzeugt, da die durch das Vorspannmittel erzeugte Vorspannkraft symmetrisch in das Reibmittel eingebracht wird und ein eventuelles Verkeilen bzw. Schrägstellen des Reibmittels mit Vorteil unterbunden wird.

In Ausgestaltung der Erfindung ist mit Vorteil vorgesehen, dass die Blattfeder längs oder quer zu einer Drehachse der Lenkspindel verlaufend ausgebildet ist. Da die Blattfeder erfindungsgemäß sowohl quer als auch längs zur Drehachse der Lenkspindel verlaufend orientiert sein kann, sind mit Vorteil unterschiedlichste Montagesituationen ermöglicht. Hierdurch ist eine Anpassung an verschiedene Bauformen von Lenksäulengehäusen und Lenkspindeln von Steer-by-Wire-Lenksystemen ermöglicht, ohne dass das achssymmetrische Anpressen aufgegeben werden müßte.

In Ausgestaltung der Erfindung ist vorgesehen, dass das Reibmittel eines oder mehrere Materialien der Gruppe, gebildet durch Metalle, Keramiken, Glasfasern, Kohlefasern, Aramidfasern, Thermoplaste, Duroplaste und Elastomere, aufweist. Durch Reibmittel aus einem bzw. einer Kombination der zuvor genannten Materialien kann eine Reibpaarung zwischen dem Reibmittel und der radialen Umfangsfläche der Lenkspindel erzeugt werden, die mit Vorteil nur einen sehr geringen Haft-Gleitreibungs-Übergang aufweist, sodass bei Beginn einer Drehbewegung der Lenkspindel eventuell auftretende Losbrechmomente möglichst gering ausfallen. Auch kann durch die Materialien ein Reibmittel gebildet werden, das in vorteilhafter Weise nur einem geringen Verschleiß unterliegt.

In einer vorteilhaften Weiterbildung der Erfindung ist vorgesehen, dass die Vorspannkraft des Vorspannmittels mittels einer auf das Vorspannmittel wirkenden Einstellschraube einstellbar ist. Die durch das Vorspannmittel erzeugte, über das Reibmittel auf die radiale Umfangsfläche der Lenkspindel wirkende Vorspannkraft kann mit Vorteil über eine Einstellschraube eingestellt werden, die auf das Vorspanmittel drückt. Diese Einstellschraube kann beispielsweise im Lenksäulengehäuse befestigt sein. Die Einstellbarkeit der Kraft bietet auch den Vorteil, dass die wirkende Vorspannkraft unabhängig von eventuellen Fertigungstoleranzen einstellbar ist und an unterschiedliche Montagesituationen anpassbar ist. Auch ist auf diese Weise mit Vorteil eine Einstellung des Lenkwiderstandsmoments nach Wunsch des Fahrers möglich.

In einer bevorzugten Ausführungsform ist vorgesehen, dass das Reibmittel im Bereich des wenigstens einen Lagers angeordnet ist. Dies ist besonders vorteilhaft, da das Lenksäulengehäuse im Bereich des Lagers zur Aufnahme der Lager und damit auch zur Aufnahme von Lagerkräften verstärkt ausgelegt ist. Die durch das Reibmittel eingebrachte durch das Vorspannmittel erzeugte Vorspannkraft ist mit Vorteil durch das Lager besonders schonend, das bedeutet mit geringem Belastungsmoment aufgrund des geringen Abstands aufnehmbar und ableitbar, da das Reibmittel im Bereich des Lagers, also mit geringem Abstand zum Lager, angeordnet ist. Diese Montagekonstellation ist auch hinsichtlich einer Wartung von Vorteil, da der Bereich des Lagers bereits von sich aus für Wartungsarbeiten zugänglich vorgesehen ist.

Eine bevorzugte Ausführungsform der Erfindung wird nachfolgend anhand der Zeichnungen näher erläutert. Funktionsmäßig gleiche Teile sind dabei mit denselben Bezugszeichen versehen. Die Figuren zeigen im Einzelnen:
- Figur 1:: eine erfindungsgemäße Lenkvorrichtung in perspektivischer Darstellung samt Detailansicht der am Lenksäulengehäuse befestigten Blattfeder;
- Figur 2:: einen Teil der erfindungsgemäßen Lenkvorrichtung (Schnitt: C - C) in perspektivischer Darstellung;
- Figur 3:: eine erfindungsgemäße Lenkvorrichtung in Draufsicht;
- Figur 4:: eine erfindungsgemäße Lenkvorrichtung in geschnittener Darstellung (A - A);
- Figur 5:: eine erfindungsgemäße Lenkvorrichtung in geschnittener Darstellung (B - B) und
- Figur 6:: eine erfindungsgemäße Blattfeder und ein erfindungsgemäßes Reibelement in perspektivischer Darstellung.

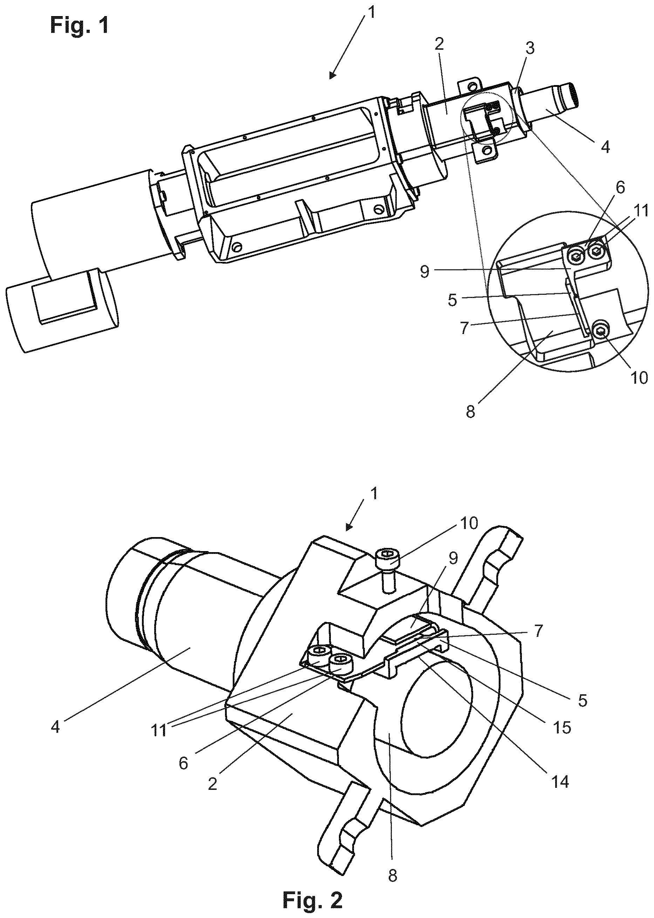

Die Figur 1 zeigt in perspektivischer Darstellung eine erfindungsgemäße Lenkvorrichtung 1 mit simuliertem Lenkwiderstandsmoment. Bei der erfindungsgemäßen Lenkvorrichtung 1 ist eine Lenkspindel 4 in Lagern 3 drehbar zu einem Lenksäulengehäuse 2 gelagert. Im Bereich des ersten Lagers 3 ist eine Blattfeder 9 mit einem ersten Ende 6 mit Befestigungsschrauben 11 an dem Lenksäulengehäuse 2 befestigt. An einem zweiten Ende 7 der Blattfeder 9 ist ein Reibmittel 5 angebracht. Die Blattfeder 9 erzeugt eine Vorspannkraft, die über eine Einstellschraube 10, die in das Lenksäulengehäuse 2 eingeschraubt ist und auf die Blattfeder 9 drückt, einstellbar. Diese Vorspannkraft sorgt dafür, dass das Reibmittel mit einer konstanten Anpresskraft radial auf die Umfangsfläche 8 der Lenkspindel 4 drückt und hierdurch bei einer Drehbewegung der Lenkspindel 4 im Lenksäulengehäuse 2 ein Lenkwiderstandsmoment erzeugt wird. Die radiale Anordnung im Bereich des ersten Lagers und das damit verbundene, symmetrische Erzeugen eines Lenkwiderstandsmoments in Bezug auf die Längsachse der Lenkspindel ermöglicht gerade ein gleichförmiges, gleichhohes Lenkwiderstandsmoment unabhängig von Drehrichtung und dem Losbrechen bei Beginn der Lenkspindeldrehung.

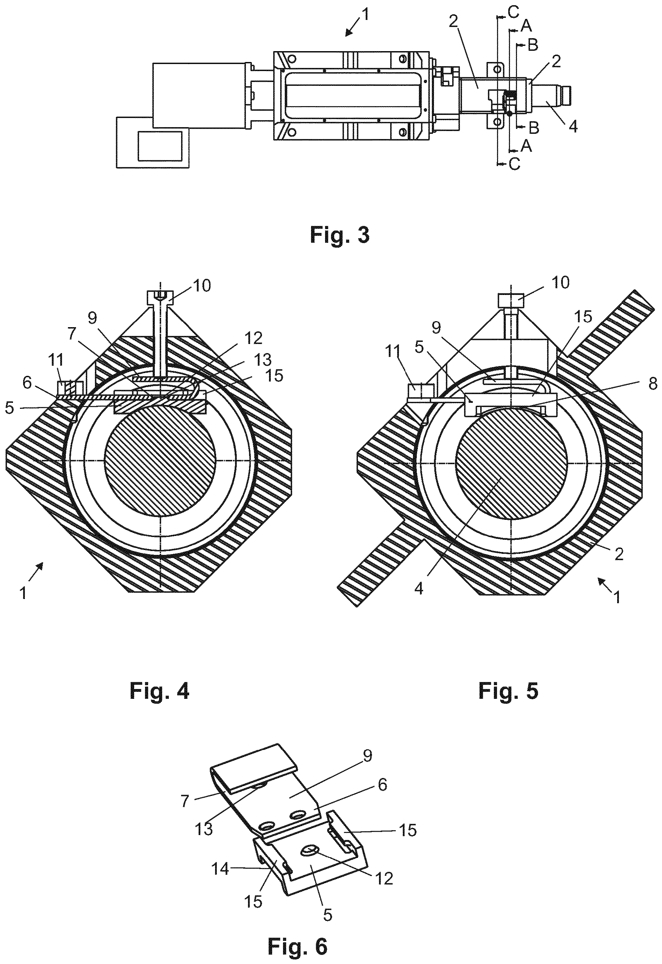

Die Figur 2 zeigt in perspektivischer Darstellung den oberen Teil (Schnitt C - C nach Figur 3) der erfindungsgemäßen Lenkvorrichtung 1 mit simuliertem Lenkwiderstandsmoment aus Figur 1. Die Figur 2 verdeutlicht insbesondere die Befestigung des ersten Endes 6 der Blattfeder 9 mit den Befestigungsschrauben 11 an dem Lenksäulengehäuse 2. Auch ist zu erkennen, dass das auf die Umfangsfläche 8 der Lenkspindel 4 drückende Reibelement 5 an dem zweiten Ende 7 der Blattfeder 9 angebracht ist.

Ebenfalls kann die in das Lenksäulengehäuse 2 eingeschraubte Einstellschraube 10, mit der die Vorspannkraft der Blattfeder 9 eingestellt werden kann, der Figur entnommen werden. Wie zu erkennen, drückt die Einstellschraube 10 auf die Blattfeder 9, um die Vorspannkraft zu erzeugen bzw. einzustellen.

Die Figur 3 zeigt in Draufsicht die erfindungsgemäße Lenkvorrichtung 1 mit simuliertem Widerstandsmoment aus Figur 1. Figur 3 können die Verläufe der Schnitte A - A der Figur 4, B - B der Figur 5 sowie C - C der Figur 2 entnommen werden.

Die Figur 4 zeigt in Schnittdarstellung (A - A nach Figur 3) die erfindungsgemäße Lenkvorrichtung 1 mit simuliertem Widerstandsmoment aus Figur 1. Ergänzend zu den Figuren 1 - 3 kann der Figur 4 insbesondere entnommen werden, wie die in das Lenksäulengehäuse 2 eingeschraubte Einstellschraube 10, mit der die Vorspannkraft der Blattfeder 9 einstellbar ist, mit der das an der Blattfeder 9 angebrachte Reibmittel 5 radial auf die Umfangsfläche 8 der Lenkspindel 4 gepresst wird, auf die Blattfeder 9 drückt. Auch kann der Figur 4 entnommen werden, dass das Reibelement 5 seitliche Führungen 15 sowie eine in eine Ausnehmung 13 der Blattfeder 9 einführbare Erhöhung 12 aufweist, um eine definierte und formschlüssige Befestigung des Reibelements 5 an der Blattfeder 9 zu gewährleisten. Hierdurch wird insbesondere ein Verrücken bzw. Verschieben des Reibelements 5 während dem Reibvorgang unterbunden, das eine unerwünschte plötzliche Veränderung des Lenkwiderstandsmoments zur Folge hätte. Auch ist der Figur 4 zu entnehmen, dass das Reibelement 5 entlang der Umfangsflache 8 der Lenkspindel 4 die Kontur der Umfangsfläche 8 der Lenkspindel 4 aufweist, um eine möglichst große Reibfläche zu gewährleisten.

Die Figur 5 zeigt in Schnittdarstellung (B - B nach Figur 3) die erfindungsgemäße Lenkvorrichtung 1 mit simuliertem Widerstandsmoment aus Figur 1. Wie der Darstellung zu entnehmen ist, weist das Reibelement 5 auf beiden Seiten seitliche Ausnehmungen 14 auf, sodass das Reibelement 5 lediglich mit einer Breite, die annähernd der Breite der Blattfeder 9 entspricht, auf die Umfangsfläche 8 der Lenkspindel drückt. Hierdurch wird insbesondere eine konstante und symmetrische Kraftaufbringung durch das Reibmittel begünstigt.

Die Figur 6 zeigt in perspektivischer Darstellung das Reibelement 5 und die Blattfeder 9 der erfindungsgemäßen Lenkvorrichtung 1 mit simuliertem Lenkwiderstandsmoment aus Figur 1. Ergänzend zu den Figuren 1 - 5 kann der Figur 6 insbesondere entnommen werden, dass das Reibelement 5 mittels einer formschlüssigen Verbindung an der Blattfeder 9 angebracht werden kann. Hierzu verfügt das Reibelement 5 über eine Erhöhung 12, die in eine hierfür vorgesehene Ausnehmung 13 am zweiten Ende 7 der Blattfeder 9 eingeführt werden kann. Zusätzlich ist die Blattfeder 9 bezüglich des Reibelements 5 mit zwei seitlichen Führungen 15 des Reibelements 5 ausgerichtet bzw. geführt.

Im Folgenden wird die Anwendung der erfindungsgemäßen Lenkvorrichtung mit simuliertem Lenkwiderstandsmoment erläutert.

Sobald eine Drehbewegung der Lenkspindel 4, die mit Lagern 3 drehbar zu dem Lenksäulengehäuse 2 gelagert ist, erfolgt, wird durch das auf die Umfangsfläche 8 der Lenkspindel 4 drückende Reibelement 5 ein Lenkwiderstandsmoment erzeugt. Grund hierfür ist die Tatsache, dass das Reibelement 5, welches formschlüssig an dem zweiten Ende 7 der Blattfeder 9 angebracht ist, von der Blattfeder 9, welche mit dem ersten Ende 6 mit Befestigungsschrauben 11 am Lenksäulengehäuse 2 befestigt ist, mit einer Vorspannkraft radial auf die Umfangsfläche 8 der Lenkspindel 4 gepresst wird. Die Vorspannkraft kann über die Einstellschraube 10, welche in das Lenksäulengehäuse 2 eingeschraubt ist und auf die Blattfeder 9 drückt, eingestellt werden.

Somit ist eine Lenkvorrichtung mit simuliertem Lenkwiderstandsmoment, insbesondere für Steer-by-Wire-Lenksysteme von Fahrzeugen, angegeben, die funktionssicher und einfach ist, und einem Fahrer des Fahrzeugs dennoch eine gewisse Schwergängigkeit der Lenkbewegung vermittelt.

### BEZUGSZEICHENLISTE

- 1: Lenkvorrichtung
- 2: Lenksäulengehäuse
- 3: Lager
- 4: Lenkspindel
- 5: Reibmittel
- 6: erstes Ende der Blattfeder
- 7: zweites Ende der Blattfeder
- 8: Umfangsfläche der Lenkspindel
- 9: Blattfeder
- 10: Einstellschraube
- 11: Befestigungsschraube
- 12: Erhöhung Reibmittel
- 13: Ausnehmung Blattfeder
- 14: Seitliche Ausnehmung Reibmittel
- 15: Seitliche Führung Reibmittel

## Patentansprüche

1. Lenkvorrichtung (1) mit simuliertem Lenkwiderstandsmoment, insbesondere für Steer-by-Wire-Lenksysteme von Fahrzeugen, aufweisend mindestens ein Lenksäulengehäuse (2) und mindestens eine darin relativ zu diesem beweglich angeordnete und in wenigstens einem Lager (3) geführte Lenkspindel (4), wobei ein zwischen Lenkspindel (4) und Lenksäulengehäuse (2) wirkendes Reibmittel (5) und ein auf dieses Reibmittel (5) wirkendes und in seiner Vorspannkraft einstellbares Vorspannmittel (9) vorgesehen sind, wobei das Vorspannmittel (9) mit einem ersten Ende (6) am Lenksäulengehäuse (2) befestigt ist, wobei das Vorspannmittel (9) mit einem zweiten Ende (7) das Reibmittel (5) radial auf eine Umfangsfläche (8) der Lenkspindel (4) pressend ist, wobei das Vorspannmittel (9) eine mehrschenkelige Blattfeder (9) aufweist, die mit zwei Schenkeln entweder am Lenksäulengehäuse (2) oder am Reibmittel (5) befestigt ist, **dadurch gekennzeichnet, dass** das Reibmittel (5) an dem zweiten Ende (7) des Vorspannmittels (9) formschlüssig befestigt ist und die Blattfeder (9) u-förmig ausgestaltet ist.

2. Vorrichtung nach Anspruch 1, **dadurch gekennzeichnet, dass** das Vorspannmittel (9) das Reibmittel (5) derart auf die Umfangsfläche (8) der Lenkspindel (4) pressend ist, dass ein so erzeugtes Lenkwiderstandsmoment unabhängig von einer Drehrichtung der Lenkspindel (4) symmetrisch um eine Nullauslenkung ist und in seiner Höhe bei Beginn und während einer Drehungsbewegung der Lenkspindel (4) annähernd gleichbleibend ist.

3. Vorrichtung nach einem der vorhergehenden Ansprüche, **dadurch gekennzeichnet, dass** die Blattfeder (9) längs oder quer zu einer Drehachse der Lenkspindel (4) verlaufend ausgebildet ist.

4. Vorrichtung nach einem der vorherigen Ansprüche, **dadurch gekennzeichnet, dass** das Reibmittel (5) eines oder mehrere Materialien der Gruppe, gebildet durch Metalle, Keramiken, Glasfasern, Kohlefasern, Aramidfasern, Thermoplaste, Duroplaste und Elastomere, aufweist.

5. Vorrichtung nach einem der vorhergehenden Ansprüche, **dadurch gekennzeichnet, dass** die Vorspannkraft des Vorspannungsmittels (9) mittels einer auf das Vorspannmittel (9) wirkenden Einstellschraube (10) einstellbar ist.

6. Vorrichtung nach einem der vorhergehenden Ansprüche, **dadurch gekennzeichnet, dass** das Reibmittel (5) im Bereich des wenigstens einen Lagers (3) angeordnet ist.

## Claims

1. Steering device (1) with simulated steering-resistance moment, in particular for steer-by-wire steering systems of vehicles, having at least one steering-column housing (2) and at least one steering spindle (4) which is arranged therein so as to be movable relative thereto and which is guided in at least one bearing (3), wherein a friction means (5) which acts between steering spindle (4) and steering-column housing (2) and a preloading means (9) which acts on said friction means (5) and is settable in terms of its preload force are provided, wherein the preloading means (9) is fastened to the steering-column housing (2) by a first end (6), wherein the preloading means (9) presses the friction means (5) radially onto a circumferential surface (8) of the steering spindle (4) with a second end (7), wherein the preloading means (9) comprises a multi-limbed leaf spring (9) which is fastened either to the steering-column housing (2) or to the friction means (5) by two limbs, **characterized in that** the friction means (5) is fastened in a form-fitting manner to the second end (7) of the preloading means (9), and the leaf spring (9) is of U-shaped form.

2. Device according to Claim 1, **characterized in that** the preloading means (9) presses the friction means (5) onto the circumferential surface (8) of the steering spindle (4) in such a way that a steering-resistance moment generated in this way, independently of a direction of rotation of the steering spindle (4), is symmetrical with respect to zero deflection and has a magnitude that remains approximately constant at the beginning of and during a rotational movement of the steering spindle (4) .

3. Device according to one of the preceding claims, **characterized in that** the leaf spring (9) is configured to extend along or transversely to an axis of rotation of the steering spindle (4).

4. Device according to one of the preceding claims, **characterized in that** the friction means (5) comprises one of more materials of the group formed by metals, ceramics, glass fibres, carbon fibres, aramide fibres, thermoplastics, thermosets and elastomers.

5. Device according to one of the preceding claims, **characterized in that** the preload force of the preloading means (9) is settable by means of a setting screw (10) which acts on the preloading means (9).

6. Device according to one of the preceding claims, **characterized in that** the friction means (5) is arranged in the region of the at least one bearing (3) .

## Revendications

1. Dispositif de direction (1) à couple de résistance de direction simulé, notamment pour des systèmes de direction à commande électrique de véhicules, présentant au moins un boîtier de colonne de direction (2) et au moins un arbre de direction (4) agencé dans celui-ci de manière mobile par rapport à celui-ci et guidé dans au moins un palier (3), un moyen de friction (5) agissant entre l'arbre de direction (4) et le boîtier de colonne de direction (2) et un moyen de précontrainte (10) agissant sur ce moyen de friction (5) et dont la force de précontrainte est réglable étant prévus, le moyen de précontrainte (9) étant fixé par une première extrémité (6) au boîtier de colonne de direction (2), le moyen de précontrainte (9) pressant par une deuxième extrémité (7) le moyen de friction (5) radialement sur une surface périphérique (8) de l'arbre de direction (4), le moyen de précontrainte (9) présentant un ressort à lame (9) à plusieurs branches, qui est fixé par deux branches soit au boîtier de colonne de direction (2) soit au moyen de friction (5), **caractérisé en ce que** le moyen de friction (5) est fixé par complémentarité de forme à la deuxième extrémité (7) du moyen de précontrainte (9) et le ressort à lame (9) est conçu en forme de U.

2. Dispositif selon la revendication 1, **caractérisé en ce que** le moyen de précontrainte (9) presse le moyen de friction (5) sur la surface périphérique (8) de l'arbre de direction (4) de telle sorte qu'un couple de résistance de direction ainsi généré est symétrique autour d'une déviation nulle, indépendamment d'une direction de rotation de l'arbre de direction (4), et sa hauteur est approximativement constante au début et pendant un mouvement de rotation de l'arbre de direction (4) .

3. Dispositif selon l'une quelconque des revendications précédentes, **caractérisé en ce que** le ressort à lame (9) est configuré pour s'étendre longitudinalement ou transversalement à un axe de rotation de l'arbre de direction (4).

4. Dispositif selon l'une quelconque des revendications précédentes, **caractérisé en ce que** le moyen de friction (5) présente un ou plusieurs matériaux du groupe formé par les métaux, les céramiques, les fibres de verre, les fibres de carbone, les fibres d'aramide, les thermoplastiques, les thermodurcissables et les élastomères.

5. Dispositif selon l'une quelconque des revendications précédentes, **caractérisé en ce que** la force de précontrainte du moyen de précontrainte (9) est réglable au moyen d'une vis de réglage (10) agissant sur le moyen de précontrainte (9).

6. Dispositif selon l'une quelconque des revendications précédentes, **caractérisé en ce que** le moyen de friction (5) est agencé dans la zone de l'au moins un palier (3).
